# EUROPEAN PATENT APPLICATION

(11) **EP 4 803 840 A1**
(43) Date of publication of application: **09.09.2026**
(21) Application number: 26160599.2
(22) Date of filing: 25.02.2026
(51) Int. Cl.: F25J 3/06

(54) **CARBON DIOXIDE RECOVERY SYSTEM AND CARBON DIOXIDE RECOVERY METHOD**

(30) Priority: 03.03.2025 JP 2025032974
(71) Applicant: Toyota Jidosha Kabushiki Kaisha, Toyota-shi, Aichi-ken 471-8571 (JP)
(72) Inventor: HIRANO, Masaki, Toyota-shi , Aichi-ken 471-8571 (JP); SUGIYAMA, Koseki, Toyota-shi , Aichi-ken 471-8571 (JP)
(74) Representative: Cabinet Beau de Loménie

(57) **Abstract**

A carbon dioxide recovery system (1) includes a compression device (20), a cooling device (30), a recovery device (60), and a separation device (40). The compression device (20) receives a gas containing carbon dioxide as an input gas (G10) and compresses the input gas (G10) to generate a compressed gas (G20). The cooling device (30) cools the compressed gas (G20) to generate liquefied carbon dioxide (LC) and outputs a residual gas (G30) that was not liquefied. The recovery device (60) recovers the liquefied carbon dioxide (LC) generated by the cooling device (30). The separation device (40) receives the residual gas (G30) output from the cooling device (30) and separates the carbon dioxide contained in the residual gas (G30).

## Description

### 1. Field of the Invention

The present disclosure relates to a technology of recovering carbon dioxide (CO2).

### 2. Description of Related Art

There is known a technology of liquefying and recovering carbon dioxide contained in a gas.

Japanese Unexamined Patent Application Publication No. 2023-170040 (JP 2023-170040 A) discloses a gas processing system. The gas processing system includes a first compressor, a separation device, a second compressor, a cooler, and a recovery device. The first compressor compresses an exhaust gas discharged from a combustor. The separation device separates the exhaust gas compressed by the first compressor into a permeating component containing carbon dioxide and a non-permeating component having a lower CO2 concentration than the permeating component. The second compressor compresses the permeating component into a compressed permeating component. The cooler cools the compressed permeating component into a cooled permeating component. The recovery device recovers the cooled permeating component.

### SUMMARY OF THE INVENTION

According to the related art described in JP 2023-170040 A, two compression steps (pressurizing steps) are required. Specifically, a first compression step is required prior to the separation step, and then a second compression step is required prior to the cooling step (liquefaction step). However, it is not efficient to perform two compression steps. Furthermore, the need for two compressors is undesirable from the viewpoint of cost and energy consumption.

One object of the present disclosure is to provide a technology that can more efficiently recover carbon dioxide.

A first aspect relates to a carbon dioxide recovery system.
A carbon dioxide recovery system includes:
a compression device configured to receive a gas containing carbon dioxide as an input gas and compress the input gas to generate a compressed gas;
a cooling device configured to cool the compressed gas to generate liquefied carbon dioxide and output a residual gas that was not liquefied;
a recovery device that recovers the liquefied carbon dioxide generated by the cooling device; and
a separation device configured to receive the residual gas output from the cooling device and separate the carbon dioxide contained in the residual gas.

A second aspect relates to a carbon dioxide recovery method.
A carbon dioxide recovery method includes:
receiving a gas containing carbon dioxide as an input gas and compressing the input gas to generate a compressed gas;
cooling the compressed gas to generate liquefied carbon dioxide and outputting a residual gas that was not liquefied;
recovering the liquefied carbon dioxide generated through the cooling; and
receiving the residual gas output as a result of the cooling and separating the carbon dioxide contained in the residual gas.

According to the present disclosure, the cooling step (liquefaction step) by the cooling device is followed by the separation step by the separation device. Specifically, the residual gas that was not liquefied through the cooling step is subjected to the separation step. A compression step by the compression device is required prior to the cooling step. However, since the pressure of the residual gas after the cooling step is sufficiently high, it is possible to perform the separation step on the residual gas without compressing the residual gas again. That is, the subsequent cooling and separation steps can be achieved with only one compression step. In this way, the number of compression steps is reduced compared to the related art, which is efficient. Furthermore, a reduction in the number of compression devices is preferable from the viewpoint of reducing costs and energy consumption.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram for explaining a comparative example;
FIG. 2 is a block diagram illustrating an example of the configuration of a carbon dioxide recovery system according to an embodiment;
FIG. 3 is a conceptual diagram for explaining an example of the carbon dioxide recovery system according to the embodiment;
FIG. 4 is a flowchart illustrating a process performed by the carbon dioxide recovery system according to the embodiment;
FIG. 5 is a conceptual diagram for explaining the effect of the carbon dioxide recovery technology according to the embodiment; and
FIG. 6 is a block diagram illustrating a modification of the carbon dioxide recovery system according to the embodiment.

### DETAILED DESCRIPTION OF EMBODIMENTS

An embodiment of the present disclosure will be described with reference to the accompanying drawings.

The present disclosure proposes a carbon dioxide recovery technology (carbon dioxide liquefaction technology) of liquefying and recovering carbon dioxide contained in a gas. To facilitate understanding of the characteristics and technical effects of the carbon dioxide recovery technology according to the present disclosure, a comparative example will first be described.

### 1. Comparative Example

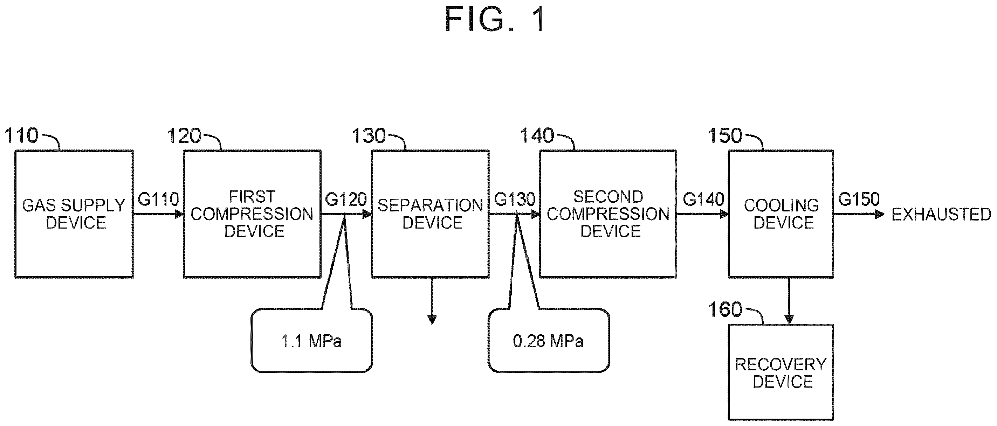

FIG. 1 is a conceptual diagram for explaining a comparative example. The comparative example illustrated in FIG. 1 corresponds to the technology disclosed in JP 2023-170040 A.

A gas supply device 110 supplies a first compression device 120 with an exhaust gas discharged from a combustor as an input gas G110.

A first compression device 120 performs a first compression step. Specifically, the first compression device 120 compresses the input gas G110 to generate a compressed gas G120. The pressure of the compressed gas G120 is 1.1 MPa. This first compression step is necessary for the subsequent separation step.

The separation device 130 performs a separation step. Specifically, the separation device 130 separates the compressed gas G120 into a permeating gas G130 and a non-permeating gas by using a separation membrane. The permeating gas G130 contains a high concentration of carbon dioxide. The concentration of CO2 in the non-permeating gas is lower than that in the permeating gas G130. The pressure of the permeating gas G130 after the separation step is 0.28 MPa.

A second compression device 140 performs a second compression step. Specifically, the second compression device 140 compresses the permeating gas G130 to generate a compressed permeating gas G140. The pressure of the compressed permeating gas G140 is 9.2 MPa. This second compression step is necessary for the subsequent cooling step (liquefaction step).

A cooling device 150 performs a cooling step (liquefaction step). Specifically, the cooling device 150 cools the compressed permeating gas G140 to liquefy the carbon dioxide contained in the compressed permeating gas G140. A non-condensed gas (residual gas) G150 that was not liquefied in this cooling step is discharged as it is.

A recovery device 160 recovers the liquefied carbon dioxide obtained through the cooling step.

According to the comparative example described above, two compression steps are required. Specifically, the first compression step is required prior to the separation step, and then the second compression step is required prior to the cooling step. However, it is not efficient to perform two compression steps. Furthermore, the need for two compressors is undesirable from the viewpoint of cost and energy consumption.

Furthermore, according to the comparative example, the non-condensed gas (residual gas) G150 that was not liquefied in the cooling step is discharged as it is. In other words, the non-condensed gas G150 is not effectively utilized.

Furthermore, according to the comparative example, the gas pressure difference before and after the separation step is 0.82 MPa (= 1.1 MPa - 0.28 MPa). In order to further enhance the effect of membrane separation in the separation step, it is desirable to further increase the gas pressure difference.

### 2. Carbon Dioxide Recovery Technology according to Present Disclosure

The carbon dioxide recovery technology (carbon dioxide liquefaction technology) according to the present disclosure will be described below.

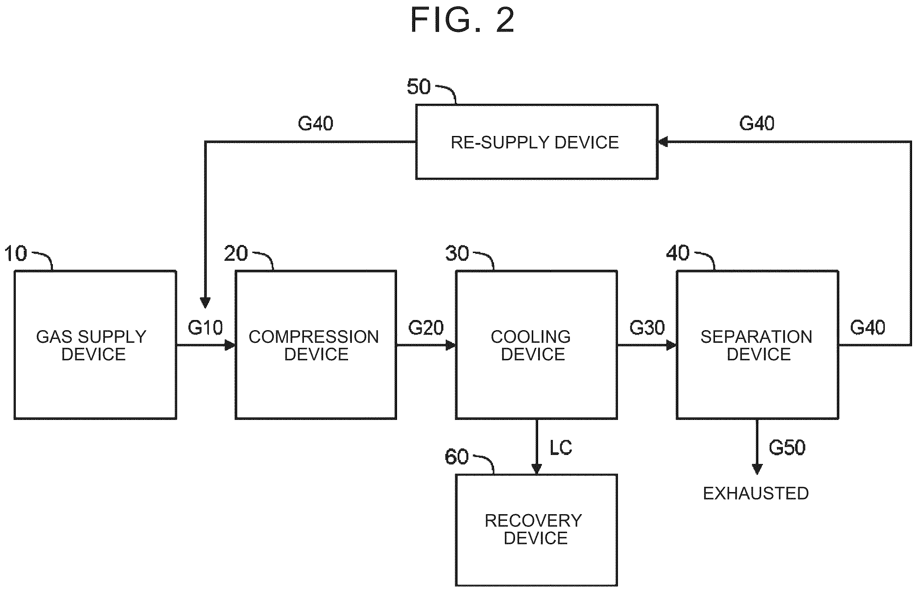

FIG. 2 is a block diagram illustrating an example of the configuration of a carbon dioxide recovery system 1 according to an embodiment of the present disclosure. The carbon dioxide recovery system 1 liquefies and recovers carbon dioxide contained in a gas. The carbon dioxide recovery system 1 may also be called a carbon dioxide liquefaction system. As illustrated in FIG. 2, the carbon dioxide recovery system 1 includes a gas supply device 10, a compression device 20, a cooling device 30, a separation device 40, a re-supply device 50, and a recovery device 60.

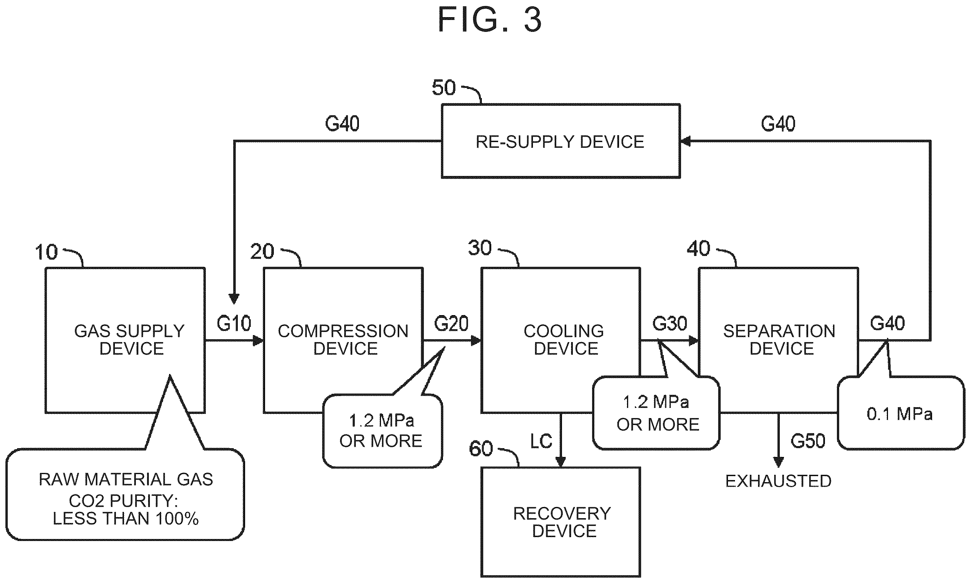

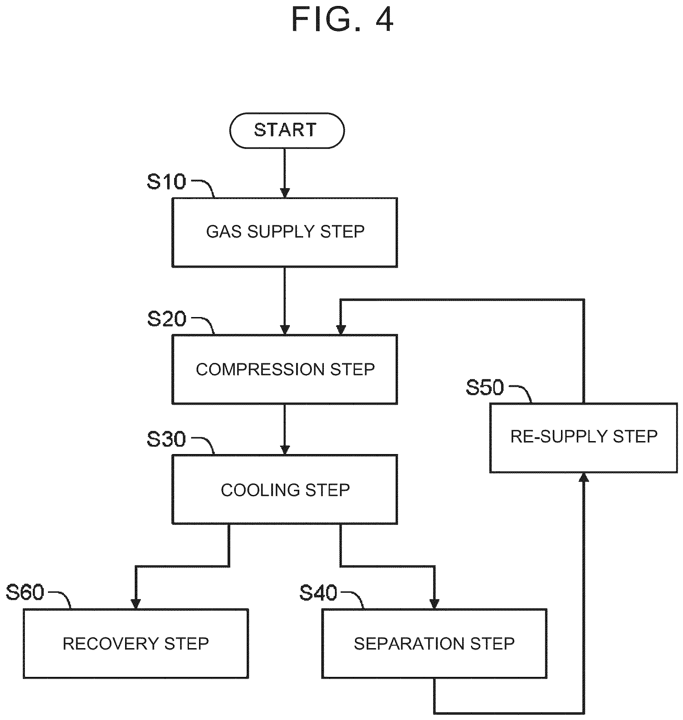

The carbon dioxide recovery system 1 according to the present embodiment will be described in more detail below with reference to FIGS. 3 and 4 in addition to FIG. 2. FIG. 3 indicates examples of numerical values such as pressure. FIG. 4 is a flowchart illustrating a process performed by the carbon dioxide recovery system 1.

### 2-1. Gas Supply Step (Step S10)

The gas supply device 10 supplies a gas containing carbon dioxide (CO2) as an input gas G10. The purity of CO2 in the input gas G10 (raw material gas) is less than 100%. For example, the input gas G10 is an exhaust gas discharged from a combustor. The gas supply device 10 is composed of a fan and the like.

### 2-2. Compression Step (Step S20)

The compression device 20 performs a compression step (pressurizing step). Specifically, the compression device 20 receives the input gas G10 and compresses the input gas G10 to generate a compressed gas G20. The pressure of the compressed gas G20 is 1.2 MPa or more. The configuration of the compression device 20 (compressor) is well known. For example, the compression device 20 is composed of a motor, an impeller driven by the motor, and the like.

### 2-3. Cooling Step (Step S30)

The cooling device 30 performs a cooling step (liquefaction step). Specifically, the cooling device 30 receives the compressed gas G20, cools the compressed gas G20, and liquefies the carbon dioxide contained in the compressed gas G20 to generate liquefied carbon dioxide LC. The cooling conditions are set as appropriate. For example, when the pressure of the compressed gas G20 is 2.0 MPa, the cooling temperature is -20°C or lower. The configuration of the cooling device 30 (cooler) is well known. For example, the cooling device 30 is composed of a heat exchanger or the like.

A residual gas G30 is a non-condensed gas that was not liquefied in this cooling step (liquefaction step). The cooling device 30 generates the liquefied carbon dioxide LC and outputs the residual gas G30 that was not liquefied. The pressure of the residual gas G30 is 1.2 MPa or more.

### 2-4. Separation Step (Step S40)

The separation device 40 performs a separation step. Specifically, the separation device 40 receives the residual gas (non-condensed gas) G30 output from the cooling device 30 and separates the carbon dioxide contained in the residual gas G30. For example, the separation device 40 has a perm-selective membrane (separation membrane) that selectively allows carbon dioxide to permeate, and separates the carbon dioxide contained in the residual gas G30 by using the perm-selective membrane. The separation membrane is made of an organic material or an inorganic material. For example, a porous membrane made of a polymer or carbon material is used as the separation membrane.

A concentrated gas (permeating gas) G40 is a gas containing the carbon dioxide separated by the separation device 40. The non-permeating gas G50 is the input residual gas G30 other than the concentrated gas G40. The concentration of CO2 in the concentrated gas G40 is higher than the concentration of CO2 in the non-permeating gas G50. In other words, the CO2 concentration can be increased through the separation step. The separation step may also be called a "concentration step".

The pre-separation pressure is the pressure of the residual gas G30 input to the separation device 40. On the other hand, the post-separation pressure is the pressure of the concentrated gas G40 obtained through the separation step. The gas pressure difference is the difference between the pre-separation pressure and the post-separation pressure. As this gas pressure difference is greater, the effect of membrane separation in the separation step is higher. In the example illustrated in FIG. 3, the gas pressure difference is 1.1 MPa or more. For example, the pre-separation pressure is 1.2 MPa or more, and the post-separation pressure is 0.1 MPa. This gas pressure difference (= 1.1 MPa or more) is significantly greater than the gas pressure difference (= 0.82 MPa) in the comparative example.

The non-permeating gas G50 is exhausted. On the other hand, the concentrated gas G40 obtained through the separation step is sent to the re-supply device 50.

### 2-5. Re-supply Step (Step S50)

The re-supply device 50 performs a re-supply step. Specifically, the re-supply device 50 re-supplies the compression device 20 with the concentrated gas G40 obtained through the separation step as a part of the input gas G10. In other words, according to the present embodiment, the concentrated gas G40, whose CO2 concentration has been increased through the separation step, is reused as a part of the input gas G10. The re-supply device 50 is composed of a fan and the like.

### 2-6. Recovery Step (Step S60)

The recovery device 60 performs a recovery step. Specifically, the recovery device 60 recovers the liquefied carbon dioxide LC generated by the cooling device 30. For example, the recovery device 60 includes a tank, and stores the liquefied carbon dioxide LC in the tank.

### 2-7. Effects

As described above, according to the present embodiment, the cooling step (liquefaction step) by the cooling device 30 is followed by the separation step by the separation device 40. Specifically, the residual gas G30 that was not liquefied through the cooling step is subjected to the separation step. A compression step by the compression device 20 is required prior to the cooling step. However, since the pressure of the residual gas G30 after the cooling step is sufficiently high, it is possible to perform the separation step on the residual gas G30 without compressing the residual gas G30 again. That is, the subsequent cooling and separation steps can be achieved with only one compression step. In this way, the number of compression steps is reduced compared to the related art, which is efficient. Furthermore, a reduction in the number of compression devices is preferable from the viewpoint of reducing costs and energy consumption.

Furthermore, according to the present embodiment, the concentrated gas G40 obtained through the separation step is re-supplied as a part of the input gas G10. That is, the concentrated gas G40, whose CO2 concentration has been increased through the separation step, is reused as a part of the input gas G10. This improves the CO2 liquefaction recovery rate.

Furthermore, according to the present embodiment, the gas pressure difference before and after the separation step is 1.1 MPa or more. This gas pressure difference is significantly greater than the gas pressure difference (= 0.82 MPa) in the comparative example. Therefore, the effect of membrane separation in the separation step is enhanced. This contributes to a further increase in the concentration of CO2 in the concentrated gas G40 obtained through the separation step, and in turn contributes to a further improvement in the CO2 liquefaction recovery rate.

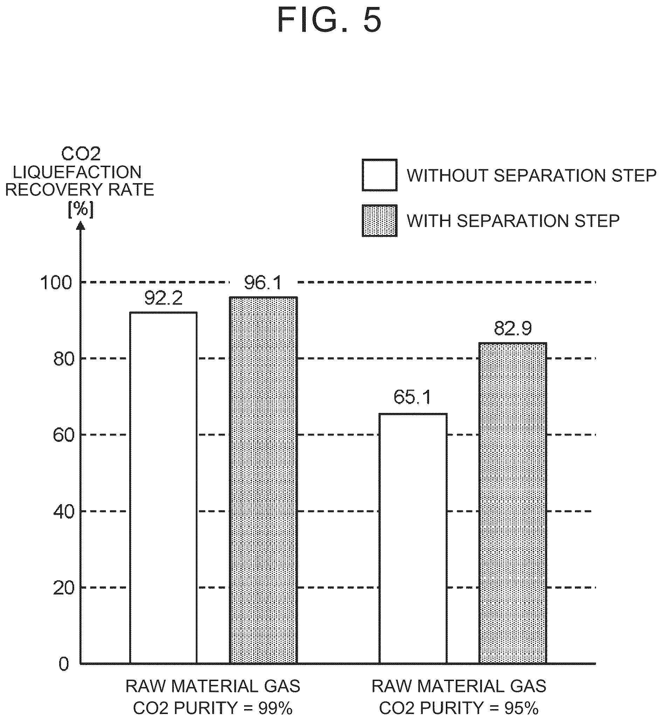

FIG. 5 is a conceptual diagram for explaining the effect of the carbon dioxide recovery technology according to the present embodiment. The vertical axis represents the CO2 liquefaction recovery rate [%]. The liquefaction conditions were liquefaction pressure = 2 MPa and liquefaction temperature = -25°C. FIG. 5 indicates the results at times when the purity of CO2 in the raw material gas (input gas G10) was 99% and 95%. For reference, the results with and without the separation step are also indicated. It can be seen that the CO2 liquefaction recovery rate tended to be lower as the purity of CO2 in the raw material gas was lower, but that the effect of the carbon dioxide recovery technology according to the present embodiment was greater as the CO2 purity was lower.

### 3. Modification

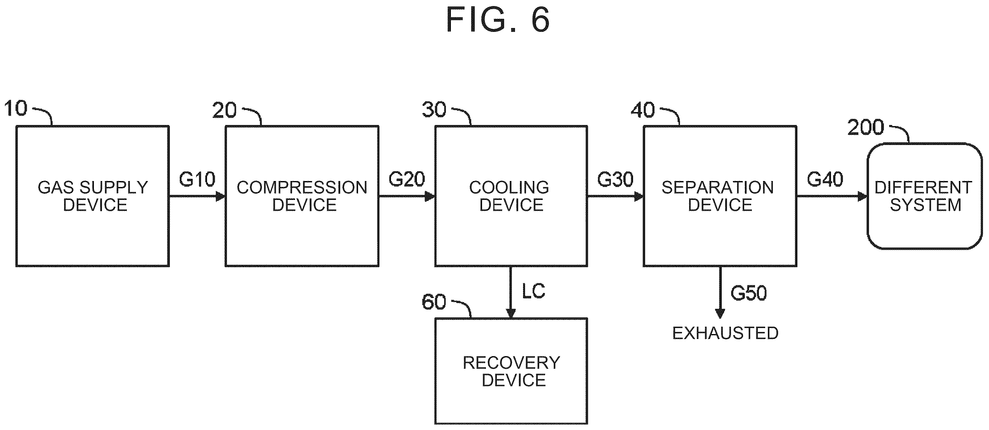

FIG. 6 is a block diagram illustrating a modification of the carbon dioxide recovery system 1 according to the present embodiment. Explanation that overlaps with the above explanation will be omitted as appropriate. According to the modification, the concentrated gas G40 obtained through the separation step is reused by a different system 200. Also in this modification, the subsequent cooling and separation steps can be achieved with only one compression step. The number of compression steps is reduced compared to the related art, which is efficient. Furthermore, a reduction in the number of compression devices is preferable from the viewpoint of reducing costs and energy consumption.

## Claims

1. A carbon dioxide recovery system (1) comprising:
a compression device (20) configured to receive a gas containing carbon dioxide as an input gas (G10) and compress the input gas (G10) to generate a compressed gas (G20);
a cooling device (30) configured to cool the compressed gas (G20) to generate liquefied carbon dioxide (LC) and output a residual gas (G30) that was not liquefied;
a recovery device (60) for recovering the liquefied carbon dioxide (LC) generated by the cooling device (30); and
a separation device (40) configured to receive the residual gas (G30) output from the cooling device (30) and separate the carbon dioxide contained in the residual gas (G30).

2. The carbon dioxide recovery system (1) according to claim 1, further comprising a re-supply device (50) configured to re-supply the compression device (20) with a gas containing the carbon dioxide separated by the separation device (40) as a part of the input gas (G10).

3. The carbon dioxide recovery system (1) according to claim 1 or 2, wherein:
a pre-separation pressure is a pressure of the residual gas (G30) input to the separation device (40);
a post-separation pressure is a pressure of the gas containing the carbon dioxide separated by the separation device (40); and
a difference between the pre-separation pressure and the post-separation pressure is 1.1 MPa or more.

4. The carbon dioxide recovery system (1) according to claim 3, wherein the pre-separation pressure is 1.2 MPa or more.

5. The carbon dioxide recovery system (1) according to claim 1 or 2, wherein a pressure of the compressed gas is 1.2 MPa or more.

6. A carbon dioxide recovery method comprising:
receiving a gas containing carbon dioxide as an input gas (G10) and compressing the input gas (G10) to generate a compressed gas (G20);
cooling the compressed gas (G20) to generate liquefied carbon dioxide (LC) and outputting a residual gas (G30) that was not liquefied;
recovering the liquefied carbon dioxide (LC) generated through the cooling; and
receiving the residual gas (G30) output as a result of the cooling and separating the carbon dioxide contained in the residual gas (G30).

7. The carbon dioxide recovery method according to claim 6, further comprising re-supplying a gas containing the carbon dioxide separated through the separating as a part of the input gas (G10).
